# EUROPEAN PATENT APPLICATION

(11) **EP 2 696 261 A2**
(43) Date of publication of application: **12.02.2014**
(21) Application number: 13179666.6
(22) Date of filing: 08.08.2013
(51) Int. Cl.: G06F 3/01, G06F 3/14, G06F 17/30, G09G 5/14

(54) **Image processing apparatus, image processing system, image processing method, and computer program product**

(30) Priority: 09.08.2012 JP 2012176965
(71) Applicant: Ricoh Company, Ltd., Tokyo 143-8555 (JP)
(72) Inventor: TSUKUDA, Tomoyuki, Tokyo, 143-8555 (JP)
(74) Representative: Schwabe - Sandmair - Marx

(57) **Abstract**

An image processing apparatus (110) includes: a storage unit (230) that stores therein a display image displayed on a display unit (112); a selection receiving unit (210) that receives selection of the display image stored in the storage unit (230); a display control unit (220) that displays a selected display image that is the display image selected by the selection receiving unit (210), on the display unit (112); a depiction input receiving unit (210) that receives an input by depicting an image on the selected display image displayed on the display unit (112); a synthetic image generating unit (218) that synthesizes a depicted image input by depicting it and the selected display image to generate a new display image; and a display image management unit (228) that stores related information relating the new display image to the selected display image, and the new display image in the storage unit (230).

## Description

### CROSS-REFERENCE TO RELATED APPLICATIONS

The present application claims priority to and incorporates by reference the entire contents of Japanese Patent Application No. 2012-176965 filed in Japan on August 9, 2012.

### BACKGROUND OF THE INVENTION

### 1. Field of the Invention

The present invention relates to an image processing apparatus, an image processing system, an image processing method, and a computer program product.

### 2. Description of the Related Art

These days, what are called "electronic information board" products are on the market. Electronic information boards are each equipped with a touch panel in an approximately 40- to 60-inch large liquid crystal or plasma display formed of a flat panel or a projector, for example. Connecting a personal computer (PC) to such an electronic information board enables a screen of the connected PC to be displayed in large size on the electronic information board. Electronic information boards are used for presentation at meetings in companies and administrative agencies and used in educational institutions, for example.

Some electronic information boards have a function to operate a PC. The function to operate a PC is a function to operate a connected PC by directly touching a screen displayed on an electronic information board instead of operating a mouse.

Electronic blackboard application software executed on a connected PC may be provided together with a device of an electronic information board. Such electronic blackboard application software provides a screen serving as a blackboard. Electronic blackboard application software, for example, has functions of handwriting through a touch panel, such as a function to depict handwritten characters on an image displayed on the electronic information board through the touch panel and a function to import a screen of the PC that provides the application and depict handwritten characters thereon in a superimposed manner. Examples of specific products include "StarBoard" (registered trademark) manufactured by Hitachi Software Engineering Co., Ltd. and "Cyber Conference" (registered trademark) manufactured by Pioneer Corporation.

The use of an electronic information board that executes such handwriting functions enables a user at a meeting in an office to directly write remarks on a screen as appropriate while operating displayed materials for explanation, record the contents of the screen including the written data as needed, review the contents of the screen at the end of the meeting, and reuse the contents of the screen, for example. This enables the user to efficiently form a conclusion and the like

In terms of a system using an electronic information board, Japanese Patent Application Laid-open No. 2006-005589, for example, discloses a technology for automatically saving meeting notes depicted on an electronic information board as history data at a predetermined timing so as to increase the convenience of a user.

There is a need to provide an image processing apparatus, an image processing system, an image processing method, and a computer program product that can facilitate user understanding of screen transition and enable the user to refer to a record of a handwritten character or the like at a timing desired by the user.

### SUMMARY OF THE INVENTION

It is an object of the present invention to at least partially solve the problems in the conventional technology.

An image processing apparatus includes: a storage unit that stores therein a display image displayed on a display unit; a selection receiving unit that receives selection of the display image stored in the storage unit; a display control unit that displays a selected display image that is the display image selected by the selection receiving unit, on the display unit; a depiction input receiving unit that receives an input by depicting an image on the selected display image displayed on the display unit; a synthetic image generating unit that synthesizes a depicted image input by depicting it and the selected display image to generate a new display image; and a display image management unit that stores related information relating the new display image to the selected display image, and the new display image in the storage unit.

An image processing system includes a terminal that stores therein an image, a display device that displays the image stored in the terminal, and an image processing apparatus that processes the image displayed on the display device. The image processing system includes: a storage unit that stores therein a display image displayed on the display device; a selection receiving unit that receives selection of the display image stored in the storage unit; a display control unit that displays a selected display image that is the display image selected by the selection receiving unit, on the display device; a depiction input receiving unit that receives an input by depicting an image on the selected display image displayed on the display device; a synthetic image generating unit that synthesizes a depicted image input by depicting it and the selected display image to generate a new display image; and a display image management unit that stores related information relating the new display image to the selected display image, and the new display image in the storage unit.

An image processing method is performed by an image processing apparatus including a storage unit that stores therein a display image displayed on a display unit. The image processing method includes: receiving selection of the display image stored in the storage unit; displaying a selected display image that is the display image selected at the receiving the selection, on the display unit; receiving an input by depicting an image on the selected display image displayed on the display unit; synthesizing a depicted image input by depicting it and the selected display image to generate a new display image; and storing related information relating the new display image to the selected display image and the new display image, in the storage unit.

A computer program product includes a non-transitory computer-usable medium having computer-readable program codes embodied in the medium for processing information in an information processing apparatus. The program codes when executed causes a computer including a storage unit that stores therein a display image displayed on a display unit to function as: a selection receiving unit that receives selection of the display image stored in the storage unit; a display control unit that displays a selected display image that is the display image selected by the selection receiving unit, on the display unit; a depiction input receiving unit that receives an input by depicting an image on the selected display image displayed on the display unit; a synthetic image generating unit that synthesizes a depicted image input by depicting it and the selected display image to generate a new display image; and a display image management unit that stores related information relating the new display image to the selected display image and the new display image, in the storage unit.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic of the entire configuration of an image processing system;
Fig. 2 is a diagram of a hardware configuration and a functional configuration of an image processing apparatus;
Fig. 3 is a schematic of a data structure of a history table stored in a storage device;
Fig. 4 is a schematic of a display example of a display unit;
Fig. 5 is a schematic of a display example of a thumbnail image list;
Fig. 6 is a flowchart of processing performed by the image processing apparatus;
Fig. 7 is another flowchart of processing performed by the image processing apparatus;
Fig. 8A is a schematic of a display example of a display image;
Fig. 8B is a schematic of the history table;
Fig. 9A is a schematic of a display example of a display screen;
Fig. 9B is a schematic of a display example of the thumbnail image list;
Fig. 9C is a schematic of the history table;
Fig. 10A is a schematic of a display example of a display image;
Fig. 10B is a schematic of a display example of the thumbnail image list;
Fig. 10C is a schematic of the history table; and
Fig. 11 is a schematic of a display example of an image file list.

### DETAILED DESCRIPTION OF THE PREFERRED EMBODIMENTS

Embodiments of an image processing apparatus, an image processing system, an image processing method, and a computer program product are described below in greater detail with reference to the accompanying drawings.

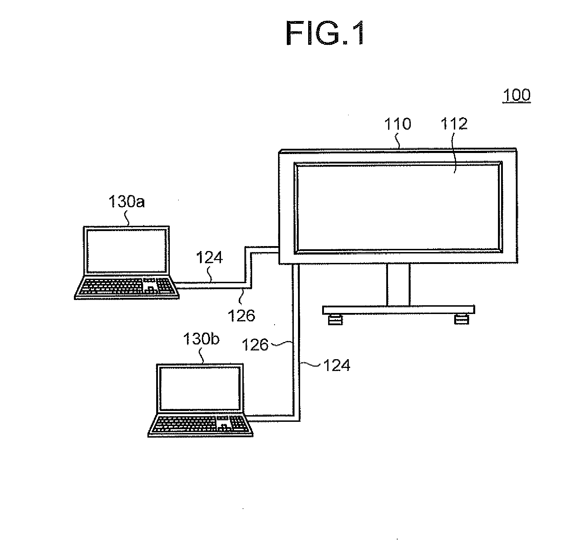

Fig. 1 is a schematic of the entire configuration of an image processing system 100 according to an embodiment. The image processing system 100 includes an image processing apparatus 110 and user personal computers (PCs) 130a and 130b. The image processing apparatus 110 and the user PCs 130a and 130b are connected with cables 124 and 126. The image processing apparatus 110 includes a display unit 112 and displays an image received from the user PCs 130a and 130b on the display unit 112.

The image processing system 100 is used at a meeting in an office, for example, and can display display materials or the like stored in the user PCs 130a and 130b on the display unit 112. This enables participants of the meeting to conduct the meeting while viewing an image displayed on the display unit 112. The image processing system 100 can receive a user operation performed using a depicting device, which will be described later, and display a depicted image corresponding to the user operation on the display unit 112. Examples of the user operation include input of information performed by making contact with the display unit 112.

The image processing apparatus 110 generates an event in response to the contact with the display unit 112 performed as the user operation. The image processing apparatus 110 then transmits the event to the user PCs 130a and 130b as an event by an input device, such as a mouse and a keyboard.

The user PCs 130a and 130b are information processing apparatuses that provide an image to be displayed on the display unit 112 of the image processing apparatus 110. The user PCs 130a and 130b each include an interface that outputs an image signal. The user PCs 130a and 130b supply an image signal to form a display image of the user PCs 130a and 130b to the image processing apparatus 110 at a predetermined rate (e.g., 30 frames per second).

In the present embodiment, the user PCs 130a and 130b each include a video graphics array (VGA) output terminal (not illustrated) as the interface. The user PCs 130a and 130b can transmit a VGA signal to the image processing apparatus 110 via the cable 124, such as a VGA cable. In another embodiment, the user PCs 130a and 130b may transmit a display image via wireless communications conforming to various types of wireless communication protocols.

The user PCs 130a and 130b can acquire an image displayed by the image processing apparatus 110 on the display unit 112. The user PCs 130a and 130b each include a universal serial bus (USB) port (not illustrated). The user PCs 130a and 130b can acquire a display image stored in the image processing apparatus 110 connected thereto via the USB cable 126 using a generic driver, such as a USB mass storage class.

The image processing system 100 according to the present embodiment uses notebook PCs as the user PCs 130a and 130b. Alternatively, the image processing system 100 may use information processing apparatuses that can supply an image frame, such as desktop PCs, tablet PCs, personal digital assistants (PDAs), digital video cameras, and digital cameras, as the user PCs 130a and 130b, for example. Although the image processing system 100 according to the present embodiment includes the two user PCs 130a and 130b, the number of user PCs included in the image processing system 100 is not limited to this examples. The image processing system 100 may include one user PC or three or more user PCs.

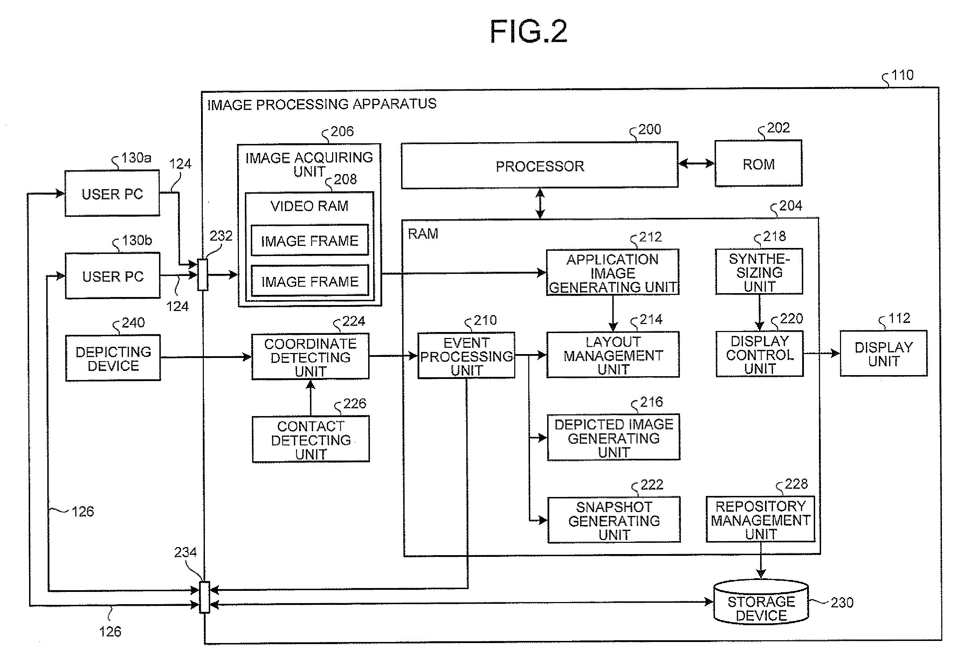

Fig. 2 is a diagram of a hardware configuration and a functional configuration of the image processing apparatus 110. The image processing apparatus 110 includes an image input interface 232 and an image input interface 234 and is connected to the user PCs 130a and 130b with these interfaces.

The image input interface 232 receives an image signal to form a display image of the user PCs 130a and 130b. The present embodiment may use a digital visual interface (DVI) connector formed of a DVI terminal as the image input interface 232. The image input interface 232 receives a VGA signal from the user PCs 130a and 130b via the cable 124, such as a VGA cable, to supply the VGA signal to an image acquiring unit 206 included in the image processing apparatus 110.

Alternatively, the image processing apparatus 110 may use a VGA connector, a high-definition multimedia interface (HDMI) connector, and a DisplayPort connector as the image input interface 232, for example. Still alternatively, the image input interface 232 may receive an image signal from the user PCs 130a and 130b via wireless communications conforming to a wireless communication protocol, such as Bluetooth (registered trademark) and Wireless Fidelity (Wi-Fi), for example.

The image input interface 234 is a physical interface to output a display image of the image processing apparatus 110 to an external device, such as the user PCs 130a and 130b. The present embodiment may use a USB socket as the image input interface 234.

The image processing apparatus 110 further includes a processor 200, a read-only memory (ROM) 202, a random access memory (RAM) 204, the image acquiring unit 206, a coordinate detecting unit 224, a contact detecting unit 226, and a storage device 230 besides the display unit 112 and the image input interfaces 232 and 234.

The processor 200 is an arithmetic processing device, such as a central processing unit (CPU) and a micro processing unit (MPU). The processor 200 runs an operating system (OS), such as WINDOWS (registered trademark) series, UNIX (registered trademark), LINUX (registered trademark), TRON, ITRON, µITORON, Chrome, and Android. The processor 200 executes a computer program described in a programming language, such as assembler, C, C++, Java (registered trademark), JavaScript (registered trademark), PERL, RUBY, and PYTHON, under the control of the OS. The ROM 202 is a non-volatile memory that stores therein a boot program, such as a basic input/output system (BIOS).

The RAM 204 is a main memory, such as a dynamic RAM (DRAM) and a static RAM (SRAM), and provides an execution space for executing a computer program. The processor 200 reads a computer program from a hard disk drive (not illustrated) that persistently stores therein a software program and various types of data to load and execute the computer program in the RAM 204. The computer program includes program modules of an event processing unit 210, an application image generating unit 212, a layout management unit 214, a depicted image generating unit 216, a synthesizing unit 218, a display control unit 220, a snapshot generating unit 222, and a repository management unit 228.

The image acquiring unit 206 is a functional unit that acquires an image signal from the user PCs 130a and 130b. If the image acquiring unit 206 receives an image signal from the user PCs 130a and 130b via the image input interface 232, the image acquiring unit 206 analyzes the image signal. The image acquiring unit 206 derives image information including the resolution and the update frequency of an image frame corresponding to a display image of the user PCs 130a and 130b formed by the image signal, to transmit the image information to the application image generating unit 212.

The image acquiring unit 206 uses the image signal to form respective image frames corresponding to display images of the user PCs 130a and 130b. The image acquiring unit 206 saves the image frames to a video RAM 208 serving as a storage unit that can temporarily store therein image data.

The application image generating unit 212 of the ROM 204 is a functional unit that generates various display windows to be displayed on the display unit 112. The display windows include: a display window to display an image frame corresponding to a display image of the user PCs 130a and 130b; a display window to display a depicted image generated by a user; a display window to display a button, a menu, or the like used for making various types of settings of the image processing apparatus 110; and a display window, such as a file viewer and a web browser, for example. The application image generating unit 212 depicts these display windows on respective image layers on which the display windows are to be depicted.

The layout management unit 214 is a functional unit that depicts a display image of the user PCs 130a and 130b on the display window generated by the application image generating unit 212. If the layout management unit 214 acquires image information from the image acquiring unit 206, the layout management unit 214 acquires an image frame stored in the video RAM 208 and then uses the image information to change the size of the image frame such that the image frame fits into the display window generated by the application image generating unit 212. The layout management unit 214 then depicts the image frame on an image layer on which the image frame is to be depicted.

The contact detecting unit 226 is a functional unit that detects contact of an object such as a depicting device 240. The present embodiment uses a coordinate input/detection device provided with an infrared-ray blocking structure disclosed in Japanese Patent No. 4627781 as the contact detecting unit 226. In the coordinate input/detection device, two light receiving and emitting devices (not illustrated) arranged at both lower ends of the display unit 112 output a plurality of infrared rays parallel to the display unit 112. The two light receiving and emitting devices receive light reflected by a reflecting member provided on the circumference of the display unit 112 on the same optical path. The contact detecting unit 226 notifies the coordinate detecting unit 224 of identification information of infrared rays output by the two light receiving and emitting devices and blocked by an object. The coordinate detecting unit 224 then specifies the coordinate position corresponding to the contact position of the object.

Alternatively, the image processing apparatus 110 uses various detecting units as the contact detecting unit 226. Examples of the various detecting units include a capacitive touch panel that specifies the contact position by detecting a change in electrostatic capacity, a resistive touch panel that specifies the contact position by detecting a change in voltage of two facing resistive films, and an electromagnetic induction touch panel that specifies the contact position by detecting electromagnetic induction generated by a contact object coming into contact with the display unit 112.

The coordinate detecting unit 224 is a functional unit that calculates the coordinate position corresponding to the position at which the object comes into contact with the display unit 112 and issues various events. In the present embodiment, the coordinate detecting unit 224 uses identification information of blocked infrared rays transmitted from the contact detecting unit 226 to calculate the coordinate position of the contact position of the object. The coordinate detecting unit 224 issues the various events to the event processing unit 210 together with the coordinate position of the contact position.

The events issued by the coordinate detecting unit 224 include an event for giving a notification that the object comes into contact with or comes close to the display unit 112 (TOUCH), an event for giving a notification that a contact point or a close point moves while the object is kept in contact with or is kept close to the display unit 112 (MOVE), and an event for giving a notification that the object moves away from the display unit 112 (RELEASE). These events include coordinate position information containing the contact position coordinate and the close position coordinate.

The depicting device 240 is brought into contact with the contact detecting unit 226 of the image processing apparatus 110 to depict an image. The depicting device 240 is a pen-shaped device provided with the contact detecting unit 226 that detects contact of an object, on the tip thereof. If the contact detecting unit 226 comes into contact with an object, the depicting device 240 transmits a contact signal indicating the contact together with identification information of the depicting device to the coordinate detecting unit 224.

The depicting device 240 is provided with a mode selector switch to switch a mode between an image processing apparatus operation mode and a user PC operation mode on the side surface or the back end thereof, for example. The image processing apparatus operation mode allows the user to depict arbitrary figures, characters, and the like on the display unit 112 of the image processing apparatus 110 and to select an object, such as a menu and a button, displayed on the display unit 112. The user PC mode allows the user to select an object, such as a menu and a button, displayed on the display unit 112.

If the user brings the depicting device 240 into contact with the image processing apparatus 110 with the mode selector switch pressed down, for example, the depicting device 240 transmits a contact signal, the identification information of the depicting device, and a mode type signal indicating the user PC operation mode. If the user brings the depicting device 240 into contact with the image processing apparatus 110 with the mode selector switch not pressed down, the depicting device 240 transmits a contact signal, the identification information of the depicting device, and a mode type signal indicating the image processing apparatus operation mode.

In the present embodiment, if identification information of infrared-rays is received from the contact detecting unit 226, the coordinate detecting unit 224 calculates the coordinate position corresponding to the contact position of the object. Subsequently, if a contact signal is received from the depicting device 240, the coordinate detecting unit 224 issues various types of events. The coordinate detecting unit 224 notifies the event processing unit 210 of information indicating a mode type (hereinafter, referred to as "mode type information") and the events.

In the present embodiment, the depicting device 240 transmits various types of signals via short-range wireless communications, such as Bluetooth (registered trademark). Alternatively, the depicting device 240 may transmit various types of signals via wireless communications using ultrasonic waves or infrared rays, for example.

The event processing unit 210 is a functional unit that processes an event issued by the coordinate detecting unit 224. In the case where the user PC operation mode is selected, receiving an event from the coordinate detecting unit 224 causes the event processing unit 210 to transmit a mouse event to the user PC 130a or the user PC 130b. In the case where the image processing apparatus operation mode is selected, receiving an event from the coordinate detecting unit 224 causes the event processing unit 210 to notify other functional units of the image processing apparatus 110 of a depiction instruction event and a selection notification event.

The mouse event is an event similar to that issued by an input device, such as a mouse, of the user PCs 130a and 130b. The mouse event is issued to the user PCs 130a and 130b in response to contact of the depicting device 240 in the case where the user PC operation mode is selected. The event processing unit 210 converts the coordinate position information included in the event issued by the coordinate detecting unit 224 into coordinate position information according to the screen size of the user PCs 130a and 130b. The event processing unit 210 then transmits the coordinate position information and the mouse event to the user PCs 130a and 130b. The user PCs 130a and 130b process the mouse event in a manner similar to that for an event issued by an input device, such as a mouse.

The depiction instruction event is an event for instructing the image processing apparatus 110 to depict an image. The depiction instruction event is issued in response to contact of the depicting device 240 with the display unit 112 in the case where the image processing apparatus operation mode is selected.

The selection notification event is an event for indicating that various objects, such as a button and a menu bar, constituting the screen displayed on the display unit 112 are selected. The selection notification event is issued in response to contact of the depicting device 240 with the display unit 112 in the case where the image processing apparatus operation mode is selected. If the coordinate position information included in the event issued by the coordinate detecting unit 224 is in the coordinate area of an object, the event processing unit 210 issues the selection notification event.

In the present embodiment, the depiction instruction event and the selection notification event each include identification information. A functional unit of the image processing apparatus 110 that operates using these events as a trigger refers to the identification information to perform various types of processing. The selection notification event further includes identification information of the selected object. A functional unit of the image processing apparatus 110 that operates using the selection notification event as a trigger refers to the identification information of the object to perform various types of processing.

The depicted image generating unit 216 is a functional unit that generates a depicted image depicted by the user with the depicting device 240. The depicted image generating unit 216 generates an image layer on which the color of the coordinate position indicated by the coordinate position information is changed into a specific color. The depicted image generating unit 216 stores the coordinate position as depiction information in a storage area for depiction information in the RAM 204.

The synthesizing unit 218 is a functional unit that synthesizes various images. The synthesizing unit 218 synthesizes an image layer on which the application image generating unit 212 depicts an image (hereinafter, referred to as an "application image layer"), an image layer on which the layout management unit 214 depicts a display image of the user PCs 130a and 130b (hereinafter, referred to as an "image capture layer"), and an image layer on which the depicted image generating unit 216 depicts an image (hereinafter, referred to as a "handwriting layer").

The display control unit 220 is a functional unit that controls the display unit 112. The display control unit 220 displays a synthetic image generated by the synthesizing unit 218 on the display unit 112. In the present embodiment, the synthesizing unit 218 calls the display control unit 220 to display the synthetic image on the display unit 112. In another embodiment, the synthesizing unit 218 and the display control unit 220 may synthesize and display an image layer on the display unit 112 at the same frequency as the update frequency of the image frame included in the image information.

The snapshot generating unit 222 is a functional unit that generates a snapshot image and a thumbnail image corresponding to the snapshot image. The snapshot image is a synthetic image of the display image of the user PCs 130a and 130b and the depicted image generated by the depicted image generating unit 216. In other words, the snapshot generating unit 222 corresponds to a synthetic image generating unit that generates data of a new display image displayed on the display unit 112.

If receiving an instruction to synthesize a display image and a depicted image, that is, an instruction to generate a snapshot image via the event processing unit 210, the snapshot generating unit 222 synthesizes the display image and the depicted image displayed on the display unit 112 at a timing when the instruction to generate is received, thereby generating a snapshot image. Based on the generated snapshot image, the snapshot generating unit 222 generates a thumbnail image of the snapshot image. After generating the snapshot image and the thumbnail image, the snapshot generating unit 222 instructs the repository management unit 228 to write the snapshot image and the thumbnail image to the storage device 230.

Although the snapshot generating unit 222 according to the present embodiment generates an image in the joint photographic experts group (JPEG) format, the format of an image is not limited to this example. Alternatively, the format of an image may be Windows (registered trademark) bitmap image, graphics interchange format (GIF), tagged image file format (TIFF), and Windows (registered trademark) Metafile (WMF), for example. An image file of the snapshot image is created in the extensible markup language (XML) format, for example, and has a data structure that allows a page and a stroke to be edited.

If no depiction processing is performed on the display image displayed on the display unit 112, that is, if no depicted image is present at the timing when the instruction to generate a snapshot image is received, the snapshot generating unit 222 generates an image displaying the display image alone as the snapshot image.

The repository management unit 228 is a functional unit that controls writing of information to the storage device 230. Upon acquiring an instruction to write a snapshot image and a thumbnail image from the snapshot generating unit 222, the repository management unit 228 writes the snapshot image and the thumbnail image to a predetermined area in the storage device 230 in accordance with the instruction to write. The repository management unit 228 acquires a snapshot image and/or a thumbnail image from the storage device 230 in response to an instruction issued from the user PCs 130a and 130b. The repository management unit 228 then transmits the acquired snapshot image and/or thumbnail image thus acquired to the user PCs 130a and 130b.

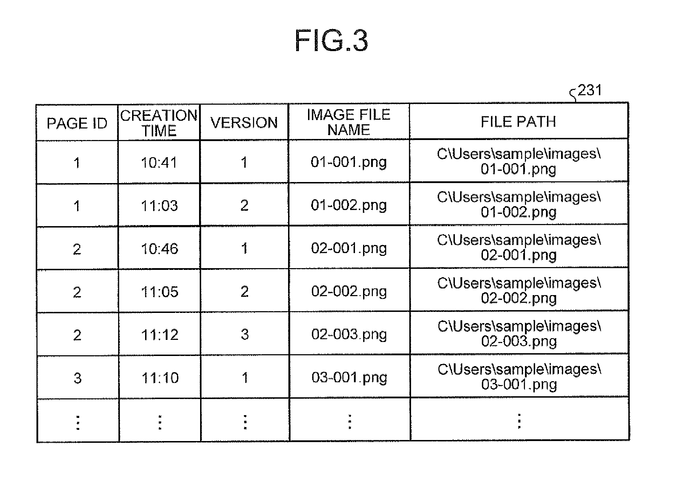

Fig. 3 is a schematic of a data structure of a history table 231 stored in the storage device 230. The history table 231 stores therein information relating to snapshot images generated previously.

Specifically, the history table 231 stores therein a page ID, creation time, a version, an image file name, and a file path for each snapshot image.

The page ID is information for identifying a display image included in a snapshot image. Because the page ID is information specified by the user, different page IDs may possibly be assigned to the same display image.

The creation time is information indicating time at which the display image included in the snapshot image is displayed. Alternatively, the creation time may be time at which the snapshot image is generated, for example.

The version is a number assigned to a plurality of snapshot images having the same page ID in order of creation. In other words, a plurality of snapshot images that have the same page ID but are different in version have the same display image and different depiction information.

The image file name is a file name of the snapshot image. The image file name according to the present embodiment is information including the page ID and the version. The file path is information indicating a storage area to which the snapshot image is written. The page ID, the creation time, the version, the image file name, and the file path will be described later in detail.

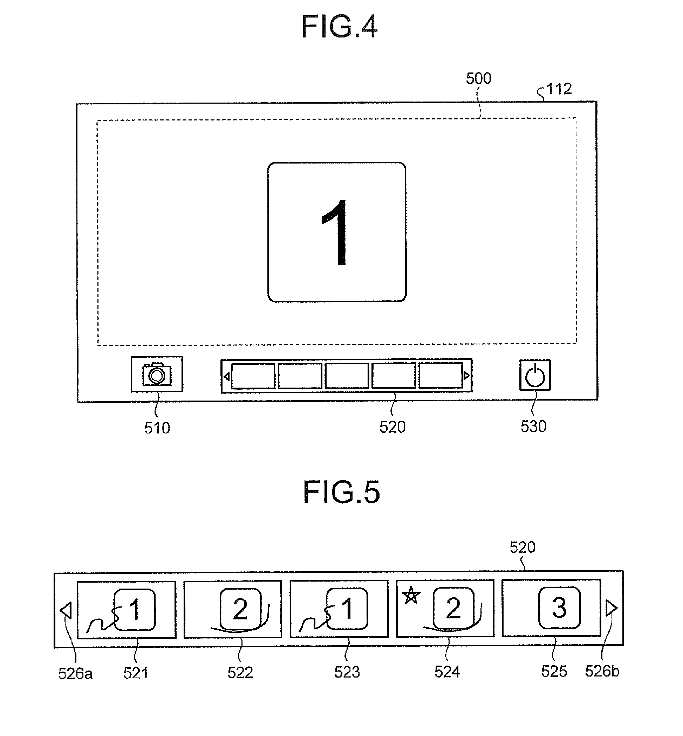

Fig. 4 is a schematic of a display example of the display unit 112. The display unit 112 displays a display image 500, a snapshot button 510, a thumbnail image list 520, and an end button 530.

The display image 500 is an image including a display image received from at least one of the user PCs 130a and 130b and is displayed in a predetermined display area on the display unit 112. In the case where the display unit 112 displays a display window of a display image received from the user PC 130a alone, the display window corresponds to the display image 500. In the case where the display unit 112 displays a display window of a display image received from the user PC 130a and a display window of a display image received from the user PC 130b, an image including both display windows corresponds to the display image 500.

The snapshot button 510 is an icon selected when the user desires to generate a snapshot image. If the user selects the snapshot button 510 using the depicting device 240 or the like, the event processing unit 210 issues a selection notification event indicating that the snapshot button 510 is selected. The snapshot generating unit 222 receives an instruction to generate a snapshot image.

The thumbnail image list 520 displays a list of thumbnail images of the snapshot images stored in the storage device 230. The thumbnail image list 520 receives selection of a thumbnail image, that is, selection of a snapshot image from the user.

Fig. 5 is a schematic of a display example of the thumbnail image list 520. The thumbnail image list 520 displays a list of thumbnail images 521 to 525 of the snapshot images previously generated by the snapshot generating unit 222 and written to the storage device 230 in order of creation time. In the case where all the thumbnail images stored in the storage device 230 cannot be displayed in the area of the thumbnail image list 520, the thumbnail image list 520 displays page scroll buttons 526a and 526b. Thus, the thumbnail image list 520 displays all the thumbnail images in response to a user operation.

If the user selects a certain thumbnail image in the thumbnail image list 520, the event processing unit 210 receives a selection notification event indicating that a snapshot image corresponding to the selected thumbnail is selected.

The end button 530 illustrated in Fig. 4 is an icon that receives an instruction to terminate the application and to terminate display of a display image and the like. If the end button 530 is selected, a file of snapshot images indicating a history of depiction performed on the display page displayed on the display unit 112 is created, and a file list screen is displayed on the display unit 112.

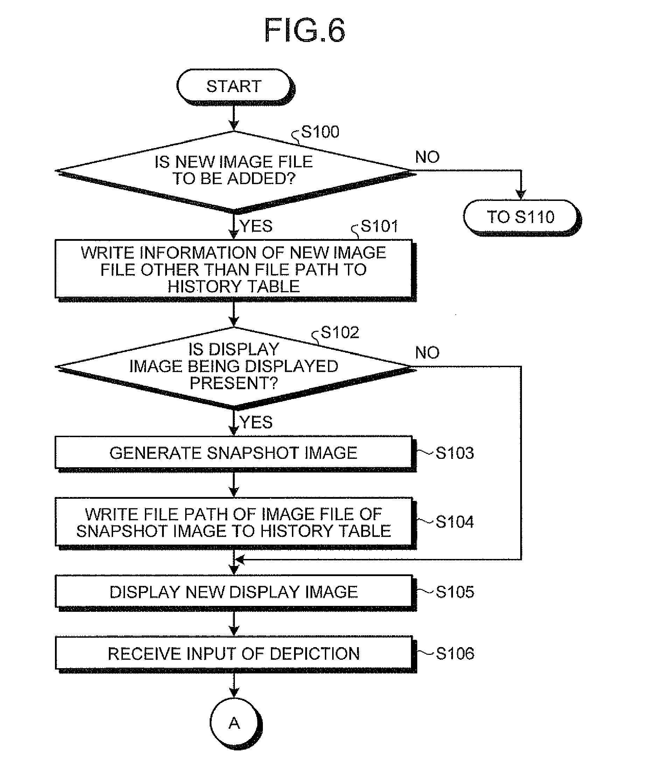

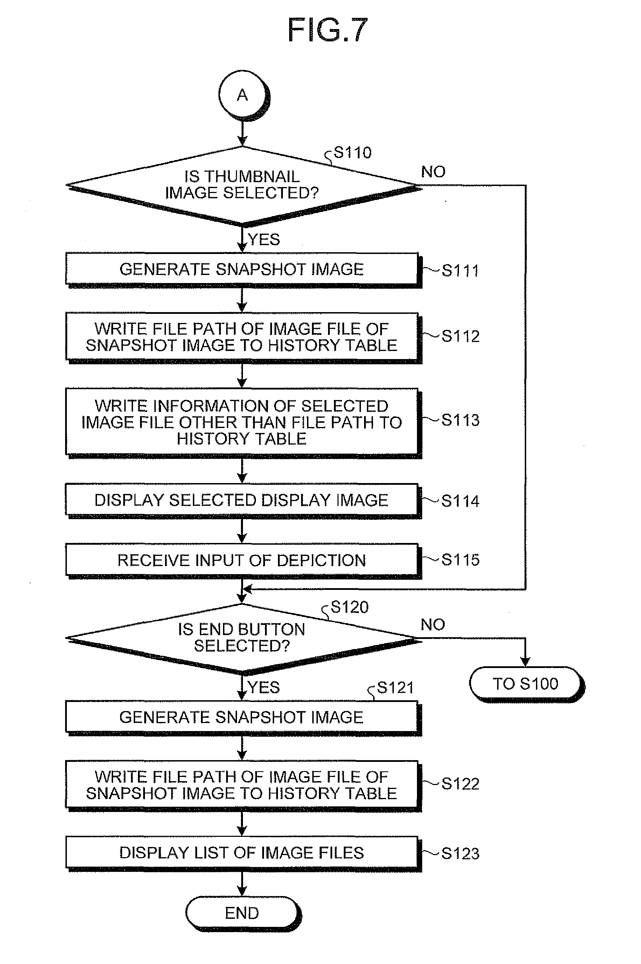

Fig. 6 and Fig. 7 are flowcharts of processing performed by the image processing apparatus 110. The event processing unit 210 specifies an event acquired from the coordinate detecting unit 224. Specifically, as illustrated in Fig. 6, the event processing unit 210 determines whether the acquired event is an instruction to add a new image file to the history table 231 of the storage device 230 (Step S100). The instruction to add a new image file is transmitted to the event processing unit 210 in any one of the following cases: the case where the user selects the snapshot button 510 and an instruction to generate a snapshot image is received; the case where an instruction to display a new display image is received from the user PCs 130a and 130b; and the case where an operation of the user PCs 130a and 130b switches the source of the display image displayed on the display unit 112.

The event processing unit 210 determines whether the snapshot button 510 is selected based on a result obtained by processing the event received from the coordinate detecting unit 224. The event processing unit 210 determines whether the display image is changed based on a result obtained by processing the event received from the coordinate detecting unit 224 similarly to the determination of whether the snapshot button 510 is selected. The event processing unit 210 determines whether the source is switched based on whether the image input interface 232 receives an image signal to form a display image of the user PCs 130a and 130b.

If the issued event is addition of a new image file (Yes at Step S100), the repository management unit 228 writes information of the new image file other than the file path to the history table 231 (Step S101).

Specifically, the repository management unit 228 assigns a new page ID, an initial value "1" as the version, and a new file name as the image file name to the new image file, and writes these to the fields of the page ID, the version, and the image file name. The new page ID is a value obtained by incrementing the maximum value of the page IDs stored in the history table 231 by 1. The image file name indicates the page ID and the version. The repository management unit 228 further writes time at which the display image is displayed as the creation time. At this point, "null" is stored in the file path.

In this way, if an event to add a new image file is issued, a snapshot image including the display image displayed on the display unit 112 when the event is issued and depiction information is generated. The information relating to the snapshot image is stored in the history table 231 as information relating to the new image file.

The display control unit 220 adds a new blank thumbnail image to the thumbnail image list 520 to return the display area of the display image to a blank state. In other words, the display image is erased from the display unit 112. Alternatively, the depiction information alone may be erased from the display unit 112, and the display image in the display area may remain displayed, for example.

If the issued event is not addition of a new file at Step S100 (No at Step S100), the processing goes to Step S110, which will be described later.

If a display image already displayed on the display unit 112 is present at the timing when the new image file is added (Yes at Step S102), the snapshot generating unit 222 synthesizes the capture layer of the display image and the handwriting layer of the depicted image displayed on the display unit 112 at the timing when the new file is added, to generate a snapshot image and generates a thumbnail image of the generated snapshot image (Step S103). The display control unit 220 adds the thumbnail image of the generated snapshot image to the thumbnail image list 520.

The repository management unit 228 writes the newly generated snapshot image and thumbnail image to the storage device 230. The repository management unit 228 generates a file path of the image file of the snapshot image and writes the generated file path to the history table 231 in a manner associated with the image file name of the image file (Step S104).

The display control unit 220 displays the new display image on the display unit 112 (Step S105). An input by depicting an image in response to a user operation is then received (Step S106). If no display image is present at Step S102 (No at Step S102), the processing goes to Step S106.

Subsequently, the processing goes to Step S110 in Fig. 7. If the issued event is selection of a thumbnail image (Yes at Step S110), the snapshot generating unit 222 synthesizes the display image and the depicted image displayed on the display unit 112 at the timing when the thumbnail image is selected, to generate a snapshot image and generates a thumbnail image of the generated snapshot image (Step S111). If the issued event is not selection of a thumbnail image at Step S110 (No at Step S110), the processing goes to Step S120, which will be described.

The repository management unit 228 writes the snapshot image and the thumbnail image newly generated at Step S111 to the storage device 230. The repository management unit 228 generates a file path of the image file of the newly generated snapshot image and writes the generated file path to the history table 231 in a manner associated with the image file name of the image file (Step S112). The page ID, the creation time, the version, and the image file name corresponding to the newly generated snapshot image are created and written to the history table 231 at the timing when the display image included in the snapshot image is displayed on the display unit 112.

The repository management unit 228 determines the image file corresponding to the selected thumbnail image as a new image file and writes information relating to the image file other than the file path, to the history table 231 (Step S113). Specifically, the repository management unit 228 assigns, to the new image file, the same page ID as that of the image file corresponding to the selected thumbnail image, a version obtained by incrementing the version of the image file corresponding to the selected thumbnail image by 1, and an image file name determined based on the page ID and the version. The repository management unit 228 then writes these pieces of information to the history table 231 as information relating to the new image file. At this point, "null" is stored in the file path corresponding thereto.

The display control unit 220 reads the snapshot image corresponding to the selected thumbnail image from the storage device 230 and displays the read snapshot image in the display area on the display unit 112 (Step S114). An input by depicting an image in response to a user operation is then received (Step S115).

Subsequently, the processing goes to Step S120. If the issued event is selection of the end button 530 (Yes at Step S120), the snapshot generating unit 222 synthesizes the display image and the depicted image displayed on the display unit 112 at the timing when the end button 530 is selected, to generate a snapshot image and generates a thumbnail image of the generated snapshot image (Step S121). The repository management unit 228 writes the snapshot image and the generated thumbnail image to the storage device 230. The repository management unit 228 generates a file path of the image file of the snapshot image and writes the generated file path to the history table 231 in a manner associated with the file name of the image file (Step S122).

The display control unit 220 classifies the image files stored in the history table 231 for each page ID and displays a list of these on the display unit 112 (Step S123). Thus, the processing is completed. If the issued event is not selection of the end button 530 at Step S120 (No at Step S120), the processing is terminated.

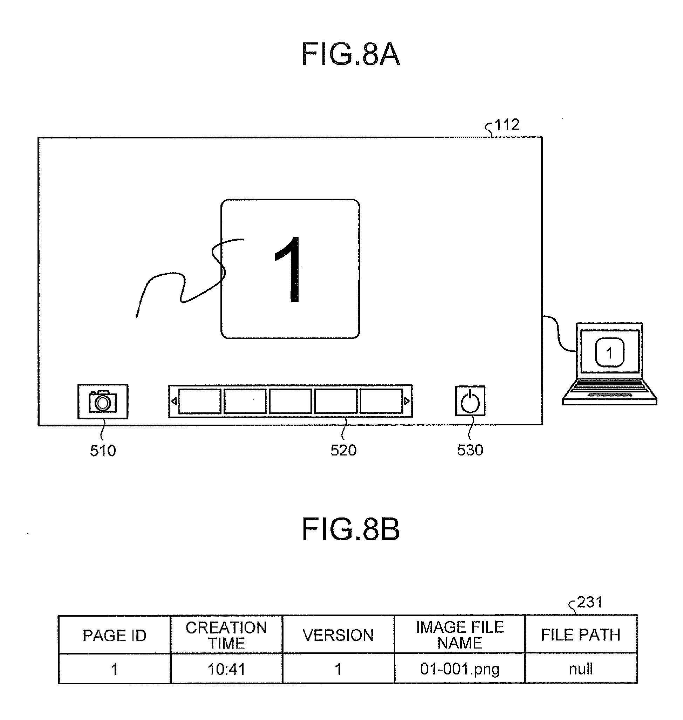

The following describes the processing performed by the image processing apparatus 110 with reference to specific examples. As illustrated in Fig. 8A, a display image indicating "1" is displayed. Determination of Yes at Step S100 in Fig. 6 causes the repository management unit 228 to write information relating to an image file corresponding to the display image indicating "1" to the history table 231 as illustrated in Fig. 8B. Specifically, the repository management unit 228 writes a page ID "1", creation time at which the display image indicating "1" is displayed, an initial value "1" of a version, and an image file name "01-001.png", which is determined based on the page ID and the version.

In this state, an image is depicted by a user operation as illustrated in Fig. 8A and the snapshot button 510 is then selected. Determination of Yes at Step S110 in Fig. 7 causes the snapshot generating unit 222 to synthesize the display image indicating "1" illustrated in Fig. 8A and the depicted image to generate a snapshot image. In addition, the snapshot generating unit 222 generates a thumbnail image of the snapshot image.

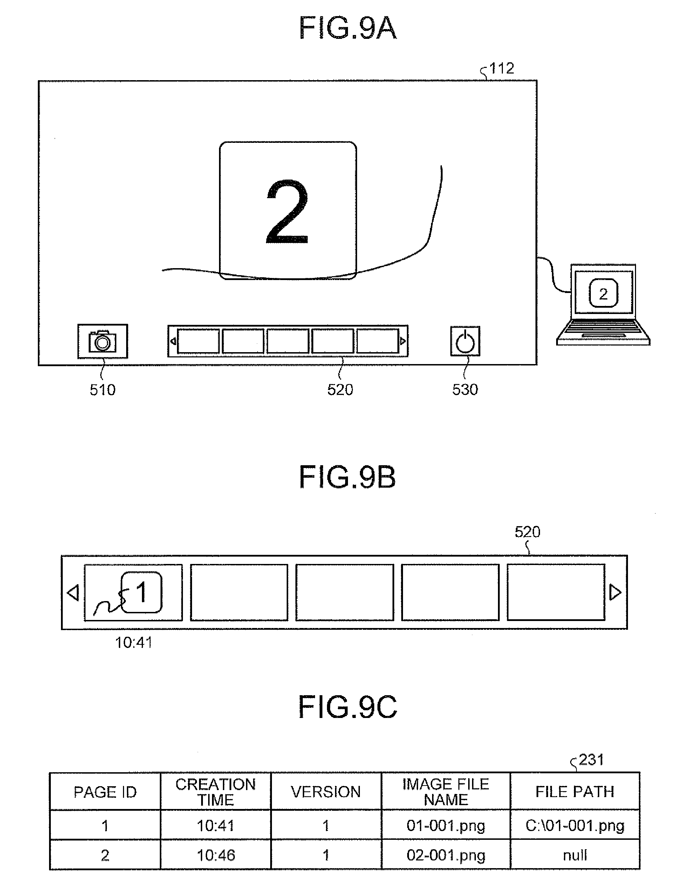

Subsequently, a display image indicating "2" illustrated in Fig. 9A is displayed. As illustrated in Fig. 9B, the display control unit 220 adds the thumbnail image of the snapshot image obtained by synthesizing the display image indicating "1" and the depicted image displayed most recently, to the thumbnail image list 520. As illustrated in Fig. 9C, the repository management unit 228 writes a file path of the image file corresponding to the display image indicating "1" to the history table 231 in a manner associated with the image file name of the image file, which is already written. The repository management unit 228 further writes information relating to the image file corresponding to the display image indicating "2" illustrated in Fig. 9A to the history table 231. Specifically, the repository management unit 231 writes a page ID "2", creation time at which the display image indicating "2" is displayed, an initial value "1" of a version for the page ID "2", and an image file name to the history table 231.

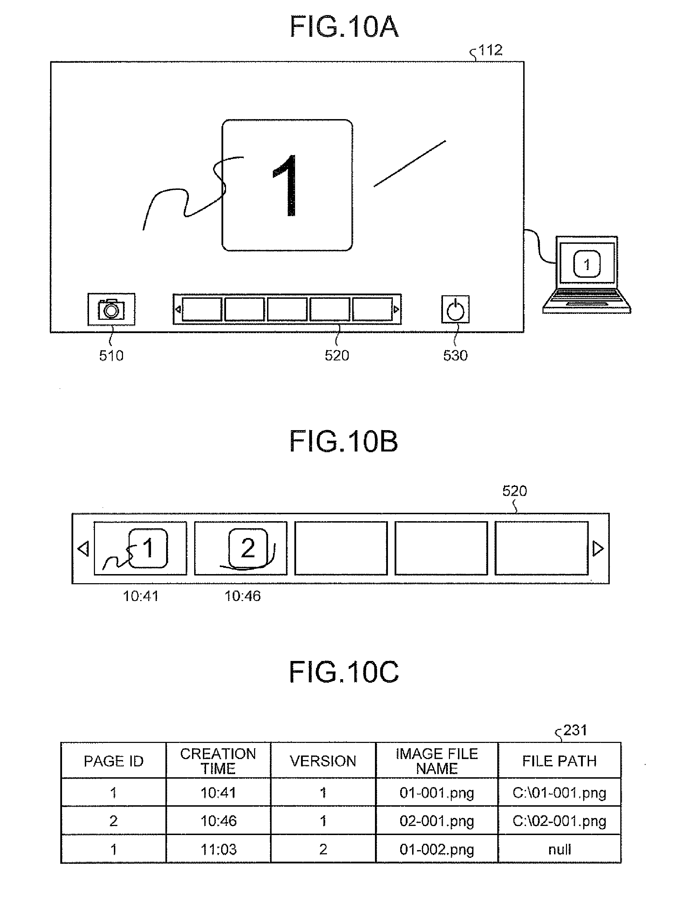

In the case where the display image indicating "2" illustrated in Fig. 9A is displayed in the display area and the thumbnail image corresponding to the display image indicating "1" is displayed in the thumbnail image list 520, selection of the thumbnail image made by the user causes the snapshot image corresponding to the selected thumbnail image to be displayed in the display area as illustrated in Fig. 10A.

The snapshot generating unit 222 synthesizes the display image indicating "2" and the depicted image most recently displayed in the display area, to generate a snapshot image. In addition, the snapshot generating unit 222 generates a thumbnail image of the snapshot image. As illustrated in Fig. 10B, the display control unit 220 adds the generated thumbnail image to the thumbnail image list 520.

The repository management unit 228 writes a file path in a field for the file path corresponding to the display image indicating "2", that is, a field for the file path corresponding to the image file name "02-001.png" in the history table 231.

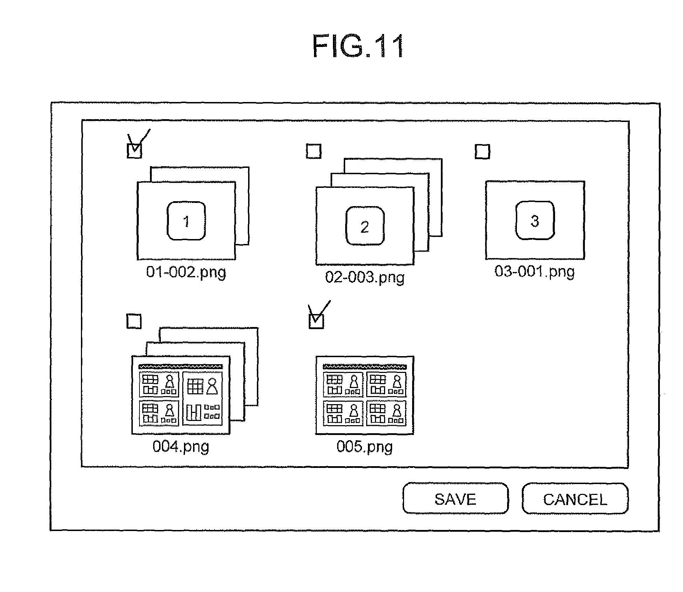

Fig. 11 is a schematic of a display example of an image file list displayed at Step S123 in Fig. 7. As illustrated in Fig. 11, the display control unit 220 can display the image files stored in the storage device 230 as history files classified for each page ID. In the example of Fig. 11, the history files each display a thumbnail image of the last image file included therein at the front. Thumbnail images of the other image files are arranged behind the last image file in order of version.

This configuration can facilitate the user's specifying history data (image file) desired to be stored and history data (image file) desired to be checked again even if there is a large amount of stored image files.

Specifically, if the user selects a checkbox of a history file illustrated in Fig. 11, the event processing unit 210 receives a selection instruction. Based on the selection instruction, the event processing unit 210 stores the selected history data in a predetermined destination (e.g., an e-mail address, a file-sharing server, and a USB memory). If the destination is an e-mail address, the event processing unit 210 transmits an e-mail with the image attached, to the destination. In consideration of security, the event processing unit 210 causes the repository management unit 228 to delete history data not selected by the user with the checkbox or the like, from the hard disk.

As described above, the image processing apparatus 110 according to the present embodiment can display a list of thumbnail images used for specifying a snapshot image of an image displayed on the display unit 112 at a meeting or the like. Thus, the user can check the thumbnail images, thereby grasping the history of the meeting or the like.

If the user selects a thumbnail image, the image processing apparatus 110 assigns the same page ID and different versions to an image file corresponding to the selected thumbnail image and an image file obtained by adding a depicted image to the image file corresponding to the selected thumbnail image, thereby making it possible to retain both image files as history data. Furthermore, the image processing apparatus 110 can manage the image files with the same page ID such that they are classified into the same group. In other words, the image processing apparatus 110 can manage image files formed of the same display image and different depicted images according to their versions. This can further facilitate the user's specifying desired history data.

While the present invention has been described using the embodiment, various changes and modifications can be made in the embodiment.

The image processing apparatus according to the present embodiment includes a control device such as a CPU, a memory such as a ROM and a RAM, an external storage device such as an HDD and a compact disk (CD) drive, a display device such as a display, and an input device such as a keyboard and a mouse. The image processing apparatus has a hardware configuration using a typical computer.

The computer program executed in the image processing apparatus according to the present embodiment is provided in a manner recorded in a computer-readable recording medium, such as a CD-ROM, a flexible disk (FD), a compact disk recordable (CD-R), and a digital versatile disk (DVD), as a file in an installable or executable format.

The computer program executed in the image processing apparatus according to the present embodiment may be provided in a manner stored in a computer connected to a network such as the Internet to be made available for downloads via the network. Alternatively, the computer program executed in the image processing apparatus according to the present embodiment may be provided or distributed over a network such as the Internet. Still alternatively, the computer program according to the present embodiment may be provided in a manner incorporated in a ROM and the like in advance.

The computer program executed in the image processing apparatus according to the present embodiment has a module configuration comprising each unit described above (the event processing unit, the application image generating unit, the layout management unit, the depicted image generating unit, the synthesizing unit, the display control unit, the snapshot generating unit, and the repository management unit). In actual hardware, the CPU (processor) reads and executes the computer program from the storage medium described above to load each unit on the main memory. Thus, each unit is generated on the main memory.

The embodiment can facilitate user understanding of screen transition and enable the user to refer to a record of a handwritten character or the like at a timing desired by the user.

The present invention can be implemented in any convenient form, for example using dedicated hardware, or a mixture of dedicated hardware and software. The present invention may be implemented as computer software implemented by one or more network processing apparatus. The network can comprise any conventional terrestrial or wireless communications network, such as the Internet. The processing apparatus can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implemental on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device. The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An image processing apparatus (110) comprising:
a storage unit (230) that stores therein a display image displayed on a display unit (112);
a selection receiving unit (210) that receives selection of the display image stored in the storage unit (230);
a display control unit (220) that displays a selected display image that is the display image selected by the selection receiving unit (210), on the display unit (112);
a depiction input receiving unit (210) that receives an input by depicting an image on the selected display image displayed on the display unit (112);
a synthetic image generating unit (218) that synthesizes a depicted image input by depicting it and the selected display image to generate a new display image; and
a display image management unit (228) that stores related information relating the new display image to the selected display image, and the new display image in the storage unit (230).

2. The image processing apparatus (110) according to claim 1, wherein
the display control unit (220) displays a selection receiving image (520) used for receiving selection of the display image stored in the storage unit (230), on the display unit (112), and
the selection receiving unit (210) receives selection of the display image in response to a selection operation of the selection receiving image (520) performed by a user.

3. The image processing apparatus (110) according to claim 1, wherein the selection receiving image (520) is a thumbnail image indicating the display image.

4. The image processing apparatus (110) according to claim 1, wherein the display image management unit (228) stores, in the storage unit (230), same display image identification information as the related information in a manner associated with the selected display image and the new display image and stores, in the storage unit (230), different pieces of depiction identification information in a manner associated with the selected display image and the new display image, the different pieces of depiction identification information indicating that the display images are different from each other in the depicted image.

5. The image processing apparatus (110) according to claim 1, further comprising:
an instruction receiving unit (210) that receives an instruction to synthesize the depicted image and the selected display image from a user, wherein
the synthetic image generating unit (218), when the instruction receiving unit (210) receives the instruction, synthesizes the depicted image and the selected display image displayed on the display unit (112) to generate the new display image at a timing when the instruction is received.

6. The image processing apparatus (110) according to claim 5, wherein the display image management unit (228) stores time information indicating time at which the new display image is displayed on the display unit (112), in the storage unit (230) in a manner associated with the new display image.

7. The image processing apparatus (110) according to claim 6, wherein
the display control unit (220) refers to the time information stored in the storage unit (230) and displays a selection receiving image (520) used for receiving selection of the display image stored in the storage unit, in chronological order, and
the selection receiving unit receives selection of the display image in response to a selection operation of the selection receiving image (520) performed by the user.

8. An image processing system (100) including a terminal (130a, 130b) that stores therein an image, a display device (112) that displays the image stored in the terminal (130a, 130b), and an image processing apparatus (110) that processes the image displayed on the display device (112), the image processing system (100) comprising:
a storage unit (230) that stores therein a display image displayed on the display device (112);
a selection receiving unit (210) that receives selection of the display image stored in the storage unit (230);
a display control unit (220) that displays a selected display image that is the display image selected by the selection receiving unit (210), on the display device (112);
a depiction input receiving unit (210) that receives an input by depicting an image on the selected display image displayed on the display device (112);
a synthetic image generating unit (218) that synthesizes a depicted image input by depicting it and the selected display image to generate a new display image; and
a display image management unit (228) that stores related information relating the new display image to the selected display image, and the new display image in the storage unit (230).

9. An image processing method performed by an image processing apparatus (110) including a storage unit (230) that stores therein a display image displayed on a display unit (112), the image processing method comprising:
receiving selection of the display image stored in the storage unit (230);
displaying a selected display image that is the display image selected at the receiving the selection, on the display unit (112);
receiving an input by depicting an image on the selected display image displayed on the display unit (112);
synthesizing a depicted image input by depicting it and the selected display image to generate a new display image; and
storing related information relating the new display image to the selected display image, and the new display image in the storage unit (230).

10. A computer program product comprising a non-transitory computer-usable medium having computer-readable program codes embodied in the medium, wherein the program codes when executed causes a computer (110) including a storage unit (230) that stores therein a display image displayed on a display unit (112) to function as:
a selection receiving unit (210) that receives selection of the display image stored in the storage unit (230);
a display control unit (220) that displays a selected display image that is the display image selected by the selection receiving unit (210), on the display unit (112);
a depiction input receiving unit (210) that receives an input by depicting an image on the selected display image displayed on the display unit (112);
a synthetic image generating unit (218) that synthesizes a depicted image input by depicting it and the selected display image to generate a new display image; and
a display image management unit (228) that stores related information relating the new display image to the selected display image, and the new display image in the storage unit (230).
